# EUROPEAN PATENT APPLICATION

(11) **EP 1 967 874 A1**
(43) Date of publication of application: **10.09.2008**
(21) Application number: 07015206.1
(22) Date of filing: 02.08.2007
(51) Int. Cl.: G02B 6/00

(54) **Backlight module**

(30) Priority: 06.03.2007 CN 200710085660
(71) Applicant: Coretronic Corporation, Hsinchu Hsin chu (TW)
(72) Inventor: Lin, Chen-hung, Hsinchu (TW); Kuo, Tzu-shou, Hsinchu (TW); Cheng, Ming-hui, Hsinchu (TW)
(74) Representative: Wagner, Bernhard Peter

(57) **Abstract**

A backlight module (100) including a control unit (12), a backlight driving unit (11), a first light source set (151), and a second light source set (152) is provided. The backlight driving unit (11) is controlled by the control unit (12) to generate a driving command to light on/off the light source sets. Therefore, the first (151) and second (152) light source set can be lighted on or off by turns according to a predetermined value, e.g., a time interval, times of power on operations. Otherwise, the second light source set (152) may be used to compensate a brightness loss of the first light sources set (151) when the displaying brightness is not enough, so as to maintain the displaying brightness within a predetermined range. Therefore, a longer lifetime of the backlight module can be obtained.

## Description

### CROSS-REFERENCE TO RELATED APPLICATION

This application claims the priority benefit of Taiwan application serial no. 95111501, filed March 31, 2006. All disclosure of the Taiwan application is incorporated herein by reference.

### BACKGROUND OF THE INVENTION

### Field of the Invention

The present invention relates to a backlight module, and particularly to a backlight module having a longer lifetime.

### Description of Related Art

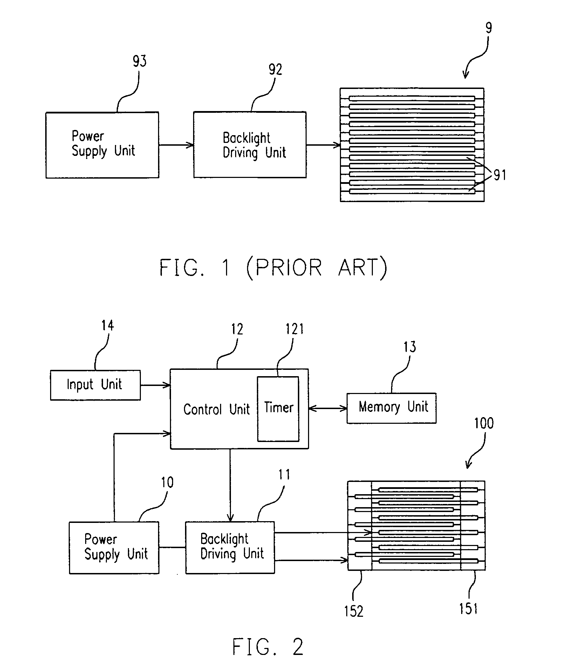

Referring to Fig. 1, a conventional backlight module 9 includes a plurality of light sources 91, a backlight driving unit 92 and a power supply unit 93. The light sources 91 are cold cathode fluorescent lamp (CCFL) tubes, and the backlight driving unit 92 is coupled between the power supply unit 93 and the light sources 91.

The power supply unit 93 provides power and drives the light sources 91 in conjunction with the backlight driving unit 92. Then, the light emitted from the light sources 91 is projected onto a display panel (now shown), thus generating enough displaying brightness.

However, the brightness of the light sources may decrease with time. Typically, a light source is considered as not suitable for use when its brightness is decreased to a value of 50% of the maximum brightness thereof. Therefore, it is currently an important issue to extend the lifetime of the backlight module.

One of the conventional solutions is to lower the current of the light sources.
However, this may lower the brightness and the light adjustment range thereof. Another conventional solution is to increase the number of the light sources. However, more the number of light sources generate more heat, and heat accumulation may also decrease the lifetimes of other components around the light sources.

### SUMMARY OF THE INVENTION

The present invention provides a backlight module to increase the lifetime of the backlight module.

The backlight module of the present invention includes a control unit, a backlight driving unit, a first light source set, and a second light source set.

The control unit is adapted for controlling and coordinating the each component. The backlight driving unit is electrically connected to and controlled by the control unit to generate a driving command. The first light source set is electrically connected to and controlled by the backlight driving unit to light on/off. The second light source set is electrically connected to and controlled by the backlight driving unit to light on/off.

The control unit controls the backlight driving unit to generate the driving command according to a predetermined value to drive the first and the second light source sets by turns for achieving a longer lifetime.

In another back light module of the present invention, the backlight module includes a control unit, a backlight driving unit, a first light source set, and a second light source set.

The control unit is adapted for controlling and coordinating the other components. The backlight driving unit is electrically connected to and controlled by the control unit to generate a driving command instructing the light source sets to power on/off. The first light source set is electrically connected to and controlled by the backlight driving unit to light on/off. The second light source set is electrically connected to and controlled by the backlight driving unit to light on/off.

The backlight driving unit drives the first light source set, and the control unit determines whether to light on the second light source set or not according to a predetermined value simultaneouly, in order to compensate a brightness loss of the first light source set, thus maintaining a brightness of the backlight module within a predetermined range.

Other objectives, features and advantages of the present invention will be further understood from the further technology features disclosed by the embodiments of the present invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 is a circuit block diagram showing a conventional direct type LCD device.

Fig. 2 is a circuit block diagram showing the backlight module according to the first and third embodiment of the present invention.

Fig. 3 is a flow chart showing the control method of the first preferred embodiment.

Fig. 4 is a circuit block diagram showing the backlight module according to the second embodiment of the present invention.

Fig. 5 is a flow chart showing the control method of the second embodiment.

Fig. 6 is a graph illustrating the third embodiment according to the present invention of the backlight module having a longer lifetime, which employs an output brightness of a second light source set to compensate a brightness loss of a first light source set, so as to maintain the light sources within a predetermined range.

Fig. 7 is schematic diagram illustrating the third embodiment, in which the first light source set is not co-planar with the second light source set, and a substrate on which the first and the second light source sets are assembled can be adjusted in corporation with the space of the second light source set.

Fig. 8 is a flow chart showing the control method of the third embodiment.

Fig. 9 is a circuit block diagram showing the backlight module according to the fourth embodiment of the present invention.

Fig. 10 is a flow chart showing the control method of the fourth embodiment.

### DESCRIPTION OF THE EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

### The First Embodiment

### Driving Light Source Sets by Turns According to Predetermined Time Interval

Referring to Fig. 2, a backlight module 100 according to the first embodiment of the present invention includes a control unit 12, a power supply unit 10, an input unit 14, a memory unit 13, a backlight driving unit 11, a first light source set 151, and a second light source set 152.

The control unit 12 is connected to the power supply unit 10, the backlight driving unit 11, a memory unit 13, and the input unit 14. The control unit 12 includes a timer 121 for timing the period of power supply provided by the power supplying unit 10. The power supplying unit 10 is adapted for supplying power to the backlight driving unit 11.

The backlight driving unit 11 is electrically connected to the power supply unit 10, the control unit 12, the first light source set 151 and the second light source set 152. The backlight driving unit 11 is controlled by the control unit 12 to generate a driving command to light on/off the first light source set 151 and the second light source set 152. The backlight driving unit 11 may be composed of a plurality of backlight drivers for driving the first light source 151 and the second light source set 152, respectively. The first and the second light source sets 151, 152 are both electrically connected to the backlight driving unit 11, and are turned on/off by turns according to the driving command. Each light source set includes a plurality of light sources, which may be cold cathode fluorescent lamps (CCFL), or light emitting diodes (LED). The first and the second light sources 151, 152 can be disposed at a bottom or a side of a display panel (not shown) according to the type of the backlight module, e.g., direct type backlight or side edge backlight.

The input unit 14 serving as an interface for users to input a predetermined value of a time interval t and the predetermined value is stored in the memory unit 13 by the control unit 12. The time interval t is a predetermined value, and is not limited to be inputted from the input unit 14, while it can also be a default value of a system of the backlight module. The first light source set 151 and the second light source set 152 are lighted on by turns according to the time interval t.

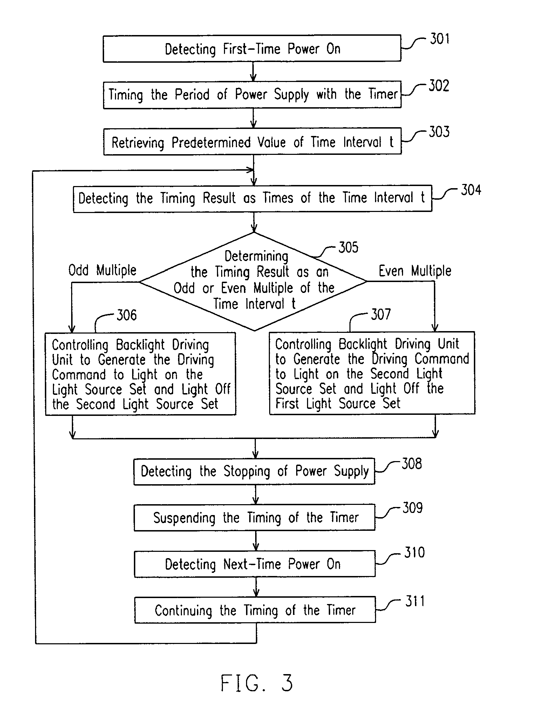

Referring to Fig. 3, first, the control unit 12 detects a first-time power on (step 301), and then the timer 121 starts to time the period of power supplying (step 302). Next, a predetermined value of the time interval t is retrieved from the memory unit 13 (step 303).

When the control unit 12 detects the timing result as multiple of the time interval t (step 304), then it is to determine the timing result as an odd or even multiple of the time interval t (step 305). If the timing result is an odd multiple of the time interval t, the control unit 12 controls the backlight driving unit 11 to generate the driving command to light on the first light source set 151 and light off the second light source set 152 (step 306). If the timing result is an even multiple of the time interval t, the control unit 12 controls the light driving unit 11 to generate the driving command to light on the second light source set 152 and light off the first light source set 151 (step 307).

When the control unit 12 detects that the power supply unit 10 stops supplying power (step 308), the timer 121 then stops timing (step 309). When a next-time power on is detected (step 310), the timer 121 continues the timing in the step 311, and then the step 304 is performed, and so forth.

In summary, the first light source set 151 and the second light source set 152 are lighted on/off by turns with to the time interval t. Therefore, the lifetime of the backlight module 100 can be increased up to about two times.

### The Second Embodiment:

### Driving Light Source sets by Turns According to Times of Power on

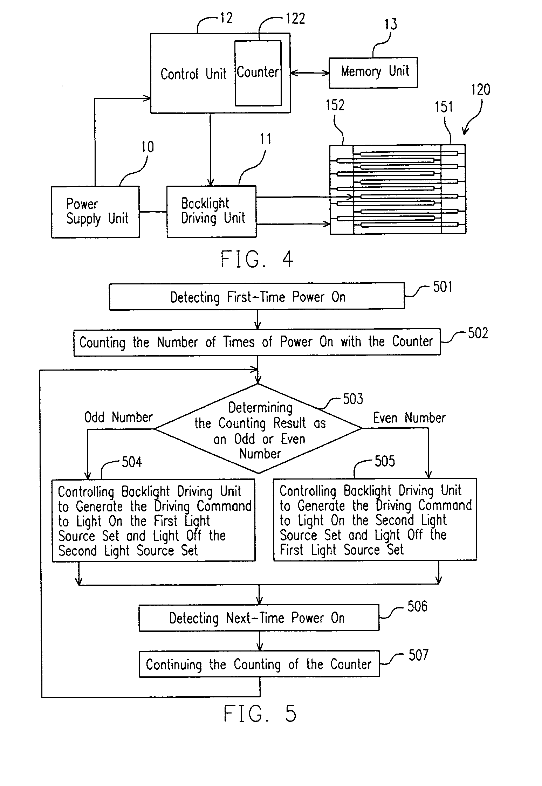

Referring to Fig. 4, the components of a backlight module 120 according to the second embodiment of the present invention are similar to those of the first embodiment, which can be understood by referring to the description of Fig. 2 and is not repeated herein.

The difference between them is that the control unit 12 of the second embodiment further includes a counter 122 for counting the number of times of the power on as the timer 121 in the first embodiment. Then, the control unit 12 is to determine the counting result as an odd or even number, and to turn on/off the light source sets by turns, thus increasing the lifetime of the backlight module 120.

Fig. 5 is a flow chart showing a control method of the second embodiment. Referring to Fig. 5, there is described the steps of the control method as following. First, the control unit 12 detects the first-time power on (step 501). Next, the counter 122 starts to count the number of times of power on (step 502). Then, it is to determine that the counting result is an odd or even number (step 503). If the counting result is an odd number, the backlight driving unit 11 is controlled to generate the driving command to light on the first light source set 151 and light off the second light source 152 (step 504). If the counting result is an even number, the backlight driving unit 11 is controlled to generate the driving command to light on the second light source set 152 and light off the first light source set (step 505). Until a next-time power on is detected (step 506), the counter 122 continues to count (step 507), and then the step 503 is performed, and so forth.

In the second embodiment, the first light source set 151 and the second light source set 152 are lighted on/off by turns according to the number of times of power on, which may be an odd or even number, thus increasing the lifetime of the backlight module 100 can be prolonged.

### The Third Embodiment:

### Compensating Brightness Loss According to Decay period

Referring to Fig. 2 again, the components of a backlight module according to the third embodiment of the present invention are the same as those of the first embodiment, which can be understood by referring to the description of Fig. 2 and is not repeated herein.

However, the third embodiment of the present invention is to turn on/off the light source sets according to a predetermined decay period T. The decay period T defined herein is an estimation period that brightness of the light source sets decays from original to a predetermined degree. It should be noted that as different light sources are selected, the corresponding decay periods T are also different. An example is illustrated in the following.

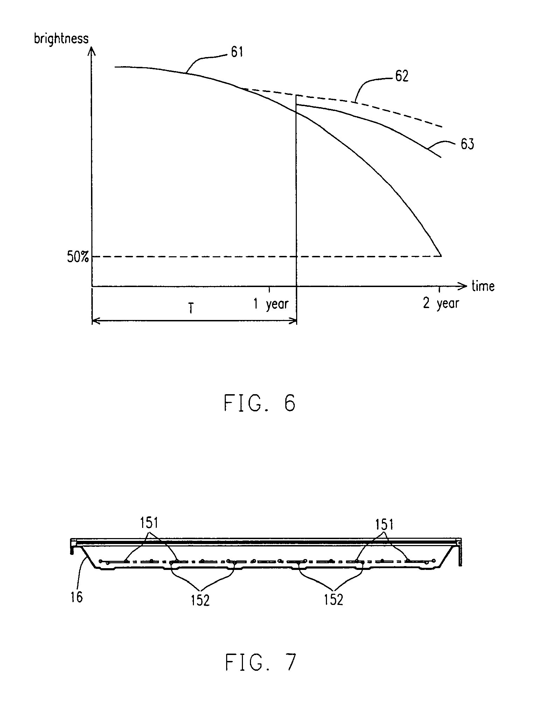

Fig. 6 is a graph showing a brightness decay curve of the light source, in which the x-coordinate represents time with unit of year, and the y-coordinate represents brightness of the light source with percentage, wherein the origin point represents that the brightness of the light source is 100% when it is lighted on at the first time. Each light source has a certain lifetime, and therefore the brightness thereof may decay as time goes by. In this embodiment, a decay period T is set previously. If the timing result does not reach the decay period T, the first light source set 151 is used as a main light source (curve 61). If the timing result reaches the decay period T, the second light source set 152 is used as an auxiliary displaying light source for compensating the brightness loss of the first light source set 151, so as to maintain brightness of the light sources within a predetermined range (curve 62). The percentage that the second light source set 152 compensates the first light source 151 can be varied according to the practical application. According to an aspect of the present invention, when compensating, the brightness of the second light source set 152 is slowly and gradually increased for compensation to avoid a sudden increase of the displaying brightness, and when the first light source set 151 can not work, the second light source set 152 becomes the main displaying light source. The third embodiment employs a second light source set 152 for compensating brightness loss of the first light source set 151, by which the backlight module 100 can maintain at a suitable brightness for a longer time, so that the backlight module 100 may have a longer lifetime.

When the decay period t of the light source set 151 is reached, the first light source set 151 is lighted off, and the second light source set 152 is turned on and serves as a main light source. The second light source set 152 may have light sources (decay curve 63), whose maximum brightness is lower than that of the first light source set 151, in order to avoid a sudden increase of the displaying brightness.

Referring to Fig. 7, in the third embodiment, the first light source 151 is not co-planar with the second light source 152. A back plate 16 on which the first light source set 151 and the second light source set 152 are assembled can be adjusted according to the height of the first and the second light source sets 151 and 152, to make the two light source sets 151 and 152 have equivalent operation frequency. Therefore, it can be prevented that the two light source sets 151 and 152 may interfere with each other, thus improving the displaying performance.

Besides, since the second light source set 152 is used for compensating the brightness light loss of the first light source set 151, the number of light sources of the second light source set 152 can be less than that of light sources of the first light source set 151. The number of the light sources of the first light source set 151 may not be equal to that of the light sources of the second light source set 152.

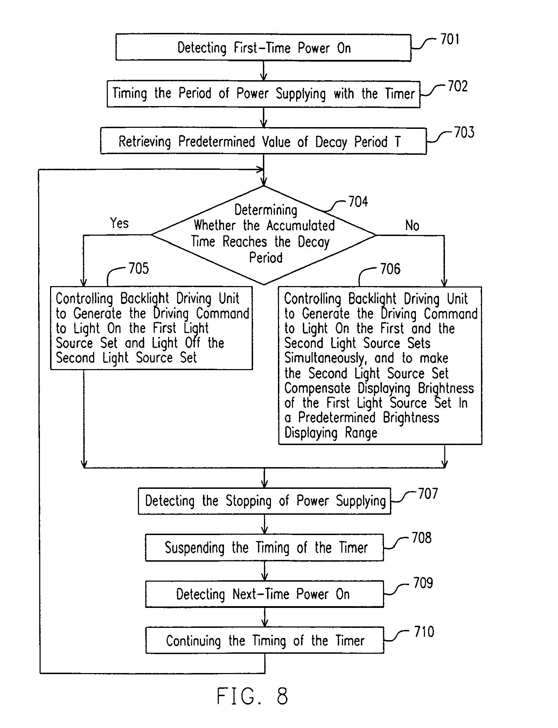

Then, referring to Figs. 2 and 8, the control method of the third embodiment is described as following. First, a first-time power on of the backlight module 100 is detected (step 701). Then, the timer 121 starts to timing the period of power supplying (step 702). Next, a predetermined value of the decay period T is retrieved (step 703). Afterward, it is determined that whether the accumulated time reaches the decay period T (step 704). If the accumulated time does not reach the decay period T, the backlight driving unit 11 is controlled to generate the driving command to light on the first light source set 151 and light off the second light source set 152 (step 705). If the accumulated time reaches the decay period T, the backlight driving unit 11 is controlled to generate the driving command to light on the first and the second light source sets 151 and 152 simultaneously, and to make the second light source set 152 compensate the displaying brightness of the first light source set 151 within a predetermined brightness range (step 706).

When it is detected that the power supplying is stopped (step 707), the timer 121 stops timing (step 708), and only when a next-time power on is detected (step 709), the counter 121 continues timing (step 710), and then the step 704 is performed, and so forth.

In summary, the third embodiment employs the second light source set 152 to compensate the brightness loss of the first light source set 151 when the first light source 151 reaches the decay period T, thus maintaining the light sources within a predetermined range. According, the lifetime of the backlight module 100 may be increased.

### The Fourth Embodiment:

### Compensating Brightness Loss According to Detected Brightness

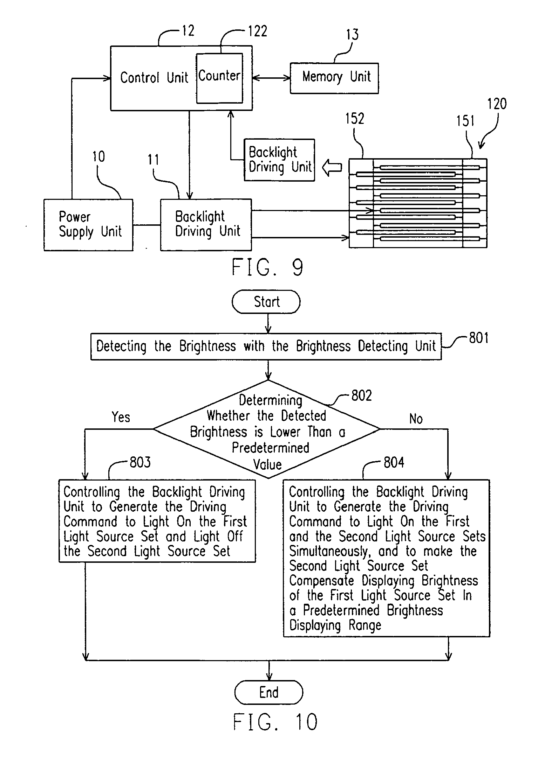

Referring to Fig. 9, in the fourth embodiment of the present invention, most components of a backlight module 140 are the same as those of the first embodiment. Therefore, similar components, i.e., the power supply unit 10, the backlight driving unit 11, the control unit 12, the first light source set 151, and the second light source set 152 can be referred to description of Fig. 2, and are not described herein.

However, the difference between them is that the backlight module 100 further comprises a brightness detecting unit 18 in this embodiment. The brightness detecting unit 18 is electrically connected to the control unit 12 for detecting the brightness of the light source sets 151 and 152 and outputting a detected brightness to the control unit 12. The detected brightness is used as a reference for generating the driving command with the backlight driving unit 11. The control unit 12 determines whether the brightness is enough according to the detected brightness, thus determining whether to use the second light source set 152 to compensate the brightness loss of the first light source set 151 or not. Accordingly, the backlight module may have a longer lifetime. The operation principle can be understood by referring to description of Fig. 6.

Referring to Figs 9 and 10, the control method includes the following steps. First, the brightness detecting unit 18 detects brightness when the backlight module 140 is powered on (step 801). Then, the control unit 12 determines whether the detected brightness is lower than a predetermined value (step 802). If the detected brightness is not lower than the predetermined value, then the backlight driving unit 11 generates the driving command to light on the first light source set 151 and light off the second light source set 152 (step 803). If the detected brightness is lower than the predetermined value, then the backlight driving unit 11 generates the driving command to light on the first and the second light source sets 151 and 152 simultaneously, and to make the second light source set 152 compensate the brightness of the first light source set 151 within a predetermined brightness range (step 804) until the operation ends.

In summary, the backlight module of the present invention is to turn on/off light source sets by turns according to a predetermined time interval or the number of power on, to increase the lifetime of the backlight module. Otherwise, the second light source set may compensate the brightness loss of the first light source set according to a decay period or a detected brightness detected by a brightness detecting unit to maintain the brightness within a predetermined range, thus increasing the lifetime of the backlight module.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the present invention" or the like is not necessary limited the claim scope to a specific embodiment, and the reference to particularly preferred exemplary embodiments of the invention does not imply a limitation on the invention, and no such limitation is to be inferred. The invention is limited only by the spirit and scope of the appended claims. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the present invention as defined by the following claims. Moreover, no element and component in the present disclosure is intended to be dedicated to the public regardless of whether the element or component is explicitly recited in the following claims.

## Claims

1. A backlight module, comprising:
a control unit;
a backlight driving unit, electrically connected to the control unit, wherein the backlight driving unit is controlled by the control unit to generate a driving command;
a first light source set, electrically connected to the backlight driving unit, wherein the first light source set is turned on/off by the driving command; and
a second light source set, electrically connected to the backlight driving unit,
wherein the second light source set is turned on/off by the driving command;
wherein the control unit controls the backlight driving unit to generate the driving command according to a predetermined value, in order to drive the first light source set and the second light source by turns.

2. The backlight module according to claim 1, wherein the predetermined value is a time interval, and the control unit comprises a timer for timing the period of power supplying , if a timing result is an odd multiple of the time interval, the backlight driving unit is controlled to generate the driving command to light on the first light source set and light off the second light source set, and if the counting result is an even multiple of the time interval, the backlight driving unit is controlled to generate the driving command to light on the second light source set and light off the first light source set.

3. The backlight module according to claim 2 further comprising a memory unit and an input unit, the memory unit and the input unit being electrically connected to the control unit, the input unit serving as an interface for users to input the predetermined value of the time interval, and the predetermined value being stored in the memory unit by the control unit.

4. The backlight module according to claim 1, wherein the predetermined value is a counting result, the control unit comprises a counter, and the counter counts the number of times of power on to obtain the counting result, if the counting result is an odd number, the backlight driving unit is controlled to generate the driving command to light on the first light source set and light off the second light source set, and if the counting result is an even number, the backlight driving unit is controlled to generate the driving command to light on the second light source set and light off the first light source set.

5. The backlight module according to claim 1, wherein the backlight driving unit comprises a plurality of backlight drivers for driving the first light source set and the second light source set, respectively.

6. A backlight module, comprising:
a control unit;
a backlight driving unit, electrically connected to the control unit, wherein the backlight driving unit is controlled by the control unit to generate a driving command;
a first light source set, electrically connected to the backlight driving unit; and
a second light source set, electrically connected to the backlight driving unit;
wherein the backlight driving unit drives the first light source set, and the control unit determines whether to light on the second light source set or not according to a predetermined value simultaneouly, in order to compensate a brightness loss of the first light source set, thus maintaining a brightness of the backlight module within a predetermined range.

7. The backlight module according to claim 6, wherein a number of light sources of the first light source set is not equal to a number of light sources of the second light source set.

8. The backlight module according to claim 6, wherein the predetermined value is an decay period that a brightness of the first light source set decreases to a predetermined degree, the control unit comprises a timer for timing the period of power supplying, if the timing result does not reach the decay period, the backlight driving unit is controlled to generate the driving command to light on the first light source set and light off the second light source set, and if the timing result reaches the decay period, the backlight driving unit is controlled to generate the driving command to light on the first light source set and the second light source set simultaneously, and to make the second light source set compensate the brightness of the first light source set in a predetermined brightness displaying range.

9. The backlight module according to claim 6, wherein the first light source set is not co-planar with the second light source set.

10. The backlight module according to claim 6 further comprising a brightness detecting unit electrically connected to the control unit, for detecting a brightness of the light source sets and outputting a detected brightness value which is provided to the control unit as the predetermined value.

11. The backlight module according to claim 10, wherein the control unit determines whether the detected brightness detected by the brightness detecting unit is lower than the predetermined value, if the detected brightness is not lower than the predetermined brightness value, the backlight driving unit is controlled to generate the driving command to light on the first light source set and light off the second light source set, and if the detected brightness is lower than the predetermined brightness, the backlight driving unit is controlled to generate the driving command to light on the first light source set and the second light source set simultaneously, and to make the second light source set compensate the brightness of the first light source set in the predetermined brightness displaying range.
